# EUROPÄISCHE PATENTANMELDUNG

(11) **EP 1 348 481 A1**
(43) Veröffentlichungstag der Anmeldung: **01.10.2003**
(21) Anmeldenummer: 02405243.3
(22) Anmeldetag: 27.03.2002
(51) Int. Cl.: B01J 19/00, B01J 19/24, F01N 11/00

(54) **Verfahren zur Regelung von Reaktionen zwischen mindestens zwei gasförmigen Edukten**

(71) Anmelder: Sulzer Hexis AG, 8400 Winterthur (CH)
(72) Erfinder: Holoch, Philip, 8405 Winterthur (CH); Gamper, Thomas, 8253 Diessenhofen (CH); Zähringer, Thomas, 8404 Winterthur (CH); Jenne, Markus, 8400 Winterthur (CH)
(74) Vertreter: Sulzer Management AG

(57) **Zusammenfassung**

Das Verfahren betrifft eine Regelung von Reaktionen zwischen mindestens zwei gasförmigen Edukten (E1, E2; A, R). Die Massenströme der Edukte sind steuerbar. Die Reaktionen finden zumindest teilweise unter Beteiligung von einem auf einer Trägerstruktur aufgebrachten, insbesondere katalytisch wirksamen Stoff statt. In oder an der Trägerstruktur werden Messungen von Temperaturen, die durch die Reaktionen bestimmt sind, durchgeführt. Die Verhältnisse der Massenströme werden bezüglich den gemessenen Temperaturen geregelt. Die Temperaturen werden mit einem Widerstandsthermometer (1, 1') gemessen. Ein Sensor (10, 10') dieses Thermometers ist drahtförmig ausgebildet. Er weist einen positiven Temperaturkoeffizienten des spezifischen Widerstands auf. In oder an der Trägerstruktur ist der Sensor zwischen einem ersten und einem zweiten Ende (21, 22) der Trägerstruktur angeordnet. Es ergibt sich so eine integrale Temperaturmessung.

## Beschreibung

Die Erfindung betrifft ein Verfahren zur Regelung von Reaktionen zwischen mindestens zwei gasförmigen Edukten gemäss Oberbegriff von Anspruch 1. Sie bezieht sich auf Reaktoren zum Durchführen des Verfahrens und Verwendungen dieser Reaktoren.

Es wird beispielsweise eine Reformierung von Kohlenwasserstoffen, die in Form von Erdgas oder verdampftem Heizöl vorliegen können, katalytisch bei rund 800°C durchgeführt. Dabei finden endotherme Reaktionen statt, für die Wasser als Reaktand benötigt wird. In einem "CPO-Reformer" (CPO = catalytic partial oxidation) wird Wasser als ein Produkt mittels einer partiellen Oxidation erzeugt, so dass eine Zufuhr von Wasser als ein zweites Edukt nicht mehr erforderlich ist. Mit der Oxidation, die durch eine Zuspeisung von Luft herbei geführt werden kann, kommen zusätzlich exotherme Reaktionen ins Spiel.

Bei der Reformierung entstehen Kohlenmonoxid und Wasserstoff, die als Edukte für elektrochemische Prozesse in Hochtemperatur-Brennstoffzellen verwendet werden können, beispielsweise in einer Batterie von Brennstoffzellen, wie sie aus der EP-A 0 780 917 (= P.6719) bekannt ist. Diese Batterie enthält einen stapelartigen Zellenblock mit Brennstoffzellen, der von einer wärmedämmenden Hülle umgeben ist. Ein Reformer, in dem keine partielle Oxidation vorgesehen ist und der einen Teil der Hülle bildet, ist mit einem Wärmetauscher verbunden, mittels dem die für die endothermen Reaktionen benötigte Wärme aus Abgasen zuführbar ist. Bei Verwendung eines CPO-Reformers kann die die für die endothermen Reaktionen benötigte Wärme durch die exotherme Oxidation geliefert werden.

Die genannten Reaktionen werden durch eine heterogene Katalyse auf der inneren Oberfläche eines porösen Körpers durchgeführt. Dieser Körper, nachfolgend als Katalysator bezeichnet, ist mit Vorteil einheitlich strukturiert. Im CPO-Reformer, in dem exotherme und endotherme Reaktionen nebeneinander ablaufen (als Vorgänger- und Folgereaktionen), erfolgt die exotherme Reaktion der Oxidation viel schneller als die endothermen Reformierreaktionen; die Oxidation findet daher in einem Eingangsbereich des Katalysators statt, in dem sich aufgrund der Wärmefreisetzung relativ hohe Temperaturen ausbilden. Diese erhöhten Temperaturen haben eine Alterung zur Folge, nämlich durch eine Wirkungsverminderung der katalytisch wirksamen Stoffe aufgrund beispielsweise eines Abdampfens. Wegen der Alterung ergibt sich im Katalysator ein Temperaturprofil, das sich im Lauf der Zeit verändert; insbesondere verschiebt sich ein Temperaturmaximum aus einem Eingangsbereich hin zu der Mitte des Katalysators.

Ein Betrieb der Brennstoffzellen-Batterie muss hinsichtlich einer variablen Last mit einer veränderbaren Energieabgabe durchführbar sein. Die Gasströme der Edukte, nämlich Brenngas und Luft, müssen entsprechend einstellbar sein. Um optimale Reaktionsbedingungen zu erhalten, müssen die Massenströme der Edukte geregelt werden. Bei Verwendung eines CPO-Reformers wird in diesem das Brenngas, dem Luft zugemischt wird, mit dem Luftsauerstoff teilweise, d. h. unterstöchiometrisch, verbrannt. Dabei ist das Mischungsverhältnis der Edukte genau einzuhalten. Denn mit zu viel Luft wird der Katalysator wegen zu hohen Temperaturen zerstört; mit zu wenig Luft bildet sich Russ, der sich auf den katalytisch wirksamen Stoffen ablagert. Messungen der Massenströme mit dem Ziel, das Mischungsverhältnis einzustellen, sind zu wenig genau. Die Regelung kann aber bezüglich den Temperaturen vorgenommen werden, die bei den Reaktionen entstehen. Auch in der Brennstoffzellen-Batterie wird eine Regelung der Massenströme vorteilhafterweise unter Verwendung von Temperaturmessungen durchgeführt.

Im CPO-Reformer kann der Katalysator bezüglich der Temperatur in drei Zonen unterteilt werden: a) eine Eingangszone, die von der Strahlungswärme einer aktiven Zone erwärmt wird; b) die aktive Zone, in der die Reaktionen stattfinden; und c) eine Abströmzone, in der die bei der Oxidation frei gesetzte und mit dem Gasstrom mitgeführte Wärme einen relativ konstanten Temperaturverlauf bewirkt. Das Temperaturprofil hängt davon ab, wie gross der Umsatz und das Mischungsverhältnis der Edukte ist. Ausserdem führt die Alterung des Katalysators dazu, dass sich die aktive Zone verschiebt. Mit dieser Verschiebung verbreitert sich die Eingangszone, und die Abströmzone wird kürzer. Wegen der Veränderlichkeit des Temperaturprofils lässt sich mit einer punktuellen Temperaturmessung keine verwertbare Information gewinnen, aus der eine Aussage über die Reaktionen ableitbar wäre. Die Verwendung einer Vielzahl punktueller Messstellen, die eine Information über das ganze Temperaturprofil ergeben würde, ist aus Kostengründen ungünstig.

Auch in der Brennstoffzellen-Batterie gibt es Temperaturprofile, die sich über den Zellenblock erstrecken und die von der abgegebenen Leistung der Batterie sowie von Alterungseffekten abhängen.

Aufgabe der Erfindung ist es, ein Verfahren zur Regelung von Reaktionen zwischen mindestens zwei gasförmigen Edukten zu schaffen, wobei eine Regelung der Massenströme der Edukte unter Verwendung von Temperaturmessungen durchgeführt wird. Das Verfahren soll sich besonders eignen, einen CPO-Reformer oder eine Brennstoffzellen-Batterie zu betreiben. Diese Aufgabe wird durch das im Anspruch 1 definierte Verfahren gelöst.

Das Verfahren betrifft eine Regelung von Reaktionen zwischen mindestens zwei gasförmigen Edukten. Die Massenströme der Edukte sind steuerbar. Die Reaktionen finden zumindest teilweise unter Beteiligung von einem auf einer Trägerstruktur aufgebrachten, insbesondere katalytisch wirksamen Stoff statt. In oder an der Trägerstruktur werden Messungen von Temperaturen, die durch die Reaktionen bestimmt sind, durchgeführt. Die Verhältnisse der Massenströme werden bezüglich den gemessenen Temperaturen geregelt. Die Temperaturen werden mit einem Widerstandsthermometer gemessen. Ein Sensor dieses Thermometers ist drahtförmig ausgebildet. Er weist einen positiven Temperaturkoeffizienten des spezifischen Widerstands auf. In oder an der Trägerstruktur ist der Sensor zwischen einem ersten und einem zweiten Ende der Trägerstruktur angeordnet. Es ergibt sich so eine integrale Temperaturmessung.

Die integrale Temperaturmessung, die bei dem erfindungsgemässen Verfahren durchgeführt wird, ist für CPO-Reformer aus folgendem Grund eine geeignete Methode. Die Ausbildung der aktiven Zone bezüglich Ausdehnung und/oder Höhe des Temperaturmaximums kann als Mass für den Umsatz und das Mischungsverhältnis der Edukte verwendet werden: Je grösser der Umsatz und/oder je grösser der relative Anteil des Luftsauerstoffs ist, so gilt, dass die aktive Zone desto breiter und/oder ihr Temperaturmaximum desto höher sind. Ist der Umsatz durch Messen des Massenstroms eines der Edukte bekannt, so kann aus der Ausbildung der aktiven Zone das Mischungsverhältnis abgeleitet werden. Mit der integralen Temperaturmessung ergibt sich ein Mittelwert der Temperatur, der die Ausbildung der aktiven Zone widerspiegelt. Es kann empirisch ein Zusammenhang zwischen den Werten der Temperaturmessung und den Reaktionen bezüglich Umsatz und Mischungsverhältnis der Edukte hergestellt werden. Dieser Zusammenhang ist weitgehend unabhängig von den genannten Alterungseffekten. Ausgehend von diesem Zusammenhang und durch Messen des Massen- oder Volumenstroms eines der Edukte lässt sich das Mischungsverhältnis der Edukte ableiten. Das Mischungsverhältnis, das möglichst exakt einen vorgegebenen Wert aufweisen soll, kann nun unter Anwendung des erfindungsgemässen Verfahrens eingestellt werden. Dabei wird die Zufuhr des Edukts, für das der Massenstrom gemessen wird, unverändert gelassen und nur die Zufuhr des anderen Edukts geregelt eingestellt. Ein gewisser Einfluss der Alterungseffekte auf den genannten Zusammenhang kann zusätzlich berücksichtigt werden, nämlich aufgrund von Erfahrungen über diesen Einfluss und durch Berücksichtigung des Alters des CPO-Reformers.

Bei der Brennstoffzellen-Batterie liegen vergleichbare Verhältnisse vor, so dass die Anwendung des erfindungsgemässen Verfahrens auch bei dieser Einrichtung von Vorteil ist.

Die abhängigen Ansprüche 2 bis 4 betreffen vorteilhafte Ausführungsformen des erfindungsgemässen Verfahrens. Ein Reaktor zum Durchführen eines Verfahrens ist Gegenstand der Ansprüche 5 bis 7. Der Anspruch 8 bezieht sich auf Anwendungen des erfindungsgemässen Verfahrens.

Nachfolgend wird die Erfindung anhand der Zeichnungen erläutert. Es zeigen:
- Fig. 1: eine schematische Darstellung einer Anordnung mit Katalysator, der von den Reaktanden in Richtung einer z-Achse durchströmt wird,
- Fig. 2: axiale Temperaturprofile des Katalysators der Fig. 1,
- Fig. 3: eine Anordnung mit einer Brennstoffzellen-Batterie und
- Fig. 4: axiale Temperaturprofile eines stapelartigen Zellenblocks, der in der Batterie der Fig. 3 eingebaut ist.

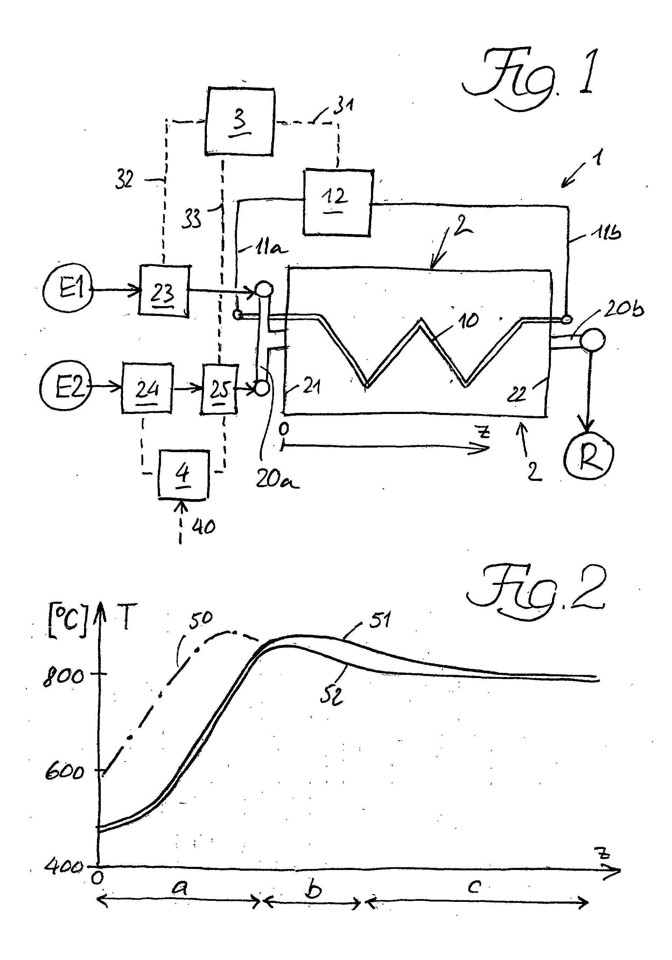

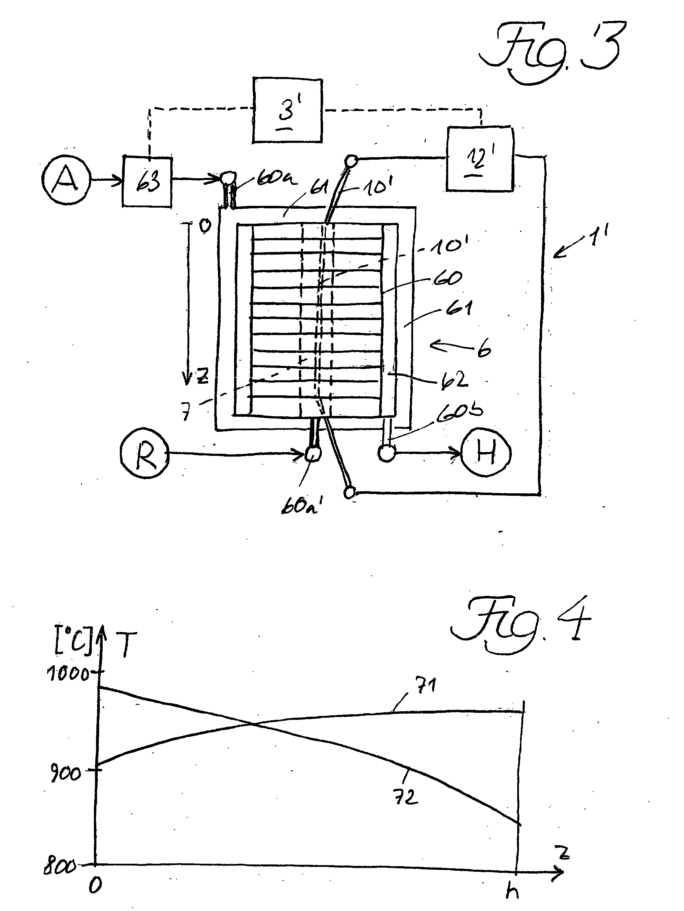

Die in Fig. 1 schematisch dargestellte Anordnung umfasst ein Widerstands-Thermometer 1 und einen Katalysator 2, der eine Trägerstruktur mit auf dieser aufgebrachtem, katalytisch wirksamem Stoff umfasst. Die Reformierungsprozesse werden durch eine heterogene Katalyse mit einem Platinmetall (insbesondere Platin, Rhodium oder Palladium), Nickel oder einem Gemisch solcher Metalle durchgeführt. Zwei gasförmige Edukte, E1 und E2, lassen sich gesteuert in den Katalysator 2 einspeisen, wobei diese Reaktanden vor dem Eintritt in den Katalysator 2 in einem Mischorgan 20a vermischt werden. Im Gemisch der Reaktanden, das den Katalysator 2 in Richtung einer z-Achse von einem Eingangsende 21 zu einem Austrittsende 22 durchströmt, finden eine partielle Oxidation und katalytische Reformierungsprozesse statt. Die Massenströme der Edukte E1 und E2 werden durch Regler 3, 4 und mittels Aktoren 23 bzw. 24 gesteuert. Die Aktoren 23 und 24 sind beispielsweise Stellventile oder Lüfter. Es entsteht im Katalysator 2 ein Produktgas R, das durch eine Leitung 20b einem Stapel von Brennstoffzellen zugeführt werden kann (vgl. Fig. 3).

Der Regler 3 ist über eine Signalleitung 31 mit dem Widerstandsthermometer 1 verbunden. Über die Leitung 31 wird ein Temperatur-Istwert übermittelt, der mit einem Widerstanddraht 10, dem Sensor des Thermometers 1, gemessen wird. Der Widerstanddraht 10, der erfindungsgemäss einen positiven Temperaturkoeffizienten aufweist, ist über elektrische Leiter 11a und 11b mit einem Widerstandsmessgerät 2 verbunden. Der Widerstanddraht 10 ist in oder an der Trägerstruktur des Katalysators 2 zwischen dem Eingangsende 21 und dem Austrittsende 22 angeordnet, so dass er eine integrale Temperaturmessung ergibt. Es wird dabei ein Mittelwert gemessen, der einer mittleren Temperatur der Trägerstruktur entspricht.

Durch den Einsatz des Widerstanddrahts 10 mit positiven Temperaturkoeffizienten erhält man ein integrales Messelement: Der Draht kann als eine Serieschaltung von infinitesimal kleinen Widerständen angesehen werden. Jeder dieser Widerstände reagiert auf die lokal vorliegende Temperatur. Die kalten Bereiche des Widerstanddrahts 10 (Abschnitte ausserhalb des Katalysators 2, die als Zuleitungen dienen) tragen wenig zum Gesamtwiderstand bei; die heissen Zonen, deren Temperaturen überwacht werden müssen, tragen den Hauptteil bei. Das Mitmessen der Widerstände in den kalten Bereichen fällt hinsichtlich der vorzunehmenden Regelung nicht ins Gewicht.

Die erfindungsgemäss bestimmte Temperatur ist der Temperatur-Istwert, bezüglich dem die Zufuhr des Edukts E1 geregelt wird. Einerseits kann das Edukt E1 die für die partielle Oxidation benötigte Luft sein. In diesem Fall ist der Regler 3 ein Lambda-Regler zur Regelung der Luftzahl λ. Andererseits könnte auch das Edukt E1 der gasförmige Brennstoff sein. In diesem Fall wäre die Luft das Edukt E2.

Der Massenstrom des Edukts E2 wird aufgrund einer Durchflussmessung mit einem Sensor 25 und einer Eingabe 40 eines Sollwerts, den der Massenstrom von E2 annehmen soll, durch Steuerung des Aktors 24 geregelt. Der eingegebene Sollwert hängt davon ab, wie gross der Bedarf an Produktgas R ist. Die Massenströme der Edukte müssen in einem vom Bedarf unabhängigen Verhältnis eingespeist werden, wobei das Mischungsverhältnis der Edukte genau einzuhalten ist. Es ist vorteilhaft, wenn der Durchfluss-Sensor 25 zwecks einer Vorsteuerung mit dem Regler 3 verbunden ist, so dass dem Regler 3 übermittelt werden kann, wie gross der Massenstrom des Edukts E2 ist. Aufgrund dieser Information, die relativ ungenau ist, kann der Regler 3 das Stellventil 23 grob voreinstellen. Eine Feineinstellung erfolgt dann erfindungsgemäss mittels der auf der Temperaturmessung beruhenden Regelung.

Mit der integralen Temperaturmessung ergibt sich ein Mittelwert der Temperatur, der die Ausdehnung der aktiven Zone widerspiegelt. Fig. 2 zeigt axiale Temperaturprofile 50, 51 und 52 des Katalysators der Fig. 1, mit einer Abszisse in Richtung der z-Achse. Wie bereits oben gesagt, kann der Katalysator 2 bezüglich der Temperatur in Zonen unterteilt werden: die Eingangszone a, die aktive Zone b und die Abströmzone c. In einem frischen, d.h. noch nicht gealterten Katalysator 2 hat das Temperaturprofil, das durch das strichpunktierte Kurvenstück 50 angedeutet ist, eine aktive Zone b, die nahe beim Eingangsende 21 liegt. Als Folge einer Alterung verschiebt sich die aktive Zone b weg vom Eingangsende 21: Temperaturprofile 51 und 52. Das Temperaturprofil 52 entspricht einem niederen Umsatz, d. h. einer Reformierung, die mit kleinen Massenströmen der Edukte E1 und E2 durchgeführt wird. Mit einer Erhöhung des Umsatzes - siehe Temperaturprofil 51 - nehmen die Breite der aktive Zone b und die Höhe des Temperaturmaximums zu.

Der Mittelwert der integral gemessenen Temperatur ist weitgehend unabhängig von der Lage der aktiven Zone b. Es kann daher ein Zusammenhang zwischen den Werten der Temperaturmessung und den Reaktionen bezüglich Umsatz und Mischungsverhältnis der Edukte hergestellt werden. Dieser Zusammenhang, der weitgehend unabhängig von den genannten Alterungseffekten ist, kann empirisch gewonnen werden. Mittels ihm und durch Messen der Durchflussmenge eines der Edukte lässt sich das Mischungsverhältnis der Edukte ableiten.

In Fig. 3 ist eine Anordnung mit einer Brennstoffzellen-Batterie 6 dargestellt. Eine solche Batterie 6 ist aus der EP-A 0 780 917 bekannt. Sie enthält einen Zellenstapel 60, der von einer wärmedämmenden Hülle 61 umgeben ist. Mindestens ein Nachverbrennungsraum 62 befindet sich zwischen Hülle 61 und Zellenstapel 60. Ein Reformer könnte in der Hülle 61 angeordnet sein, was hier aber nicht der Fall ist. Aus dem Nachverbrennungsraum 62 und durch einen Austrittsstutzen 60b wird ein heisses Abgas H aus der Batterie 6 abgegeben.

Die Brennstoffzellen-Batterie 6 der Fig. 3 lässt sich als einen Reaktor ansehen, für den das erfindungsgemässe Verfahren anwendbar ist. Dabei ist die Stapelanordnung der Brennstoffzellen die Trägerstruktur. Die Edukte sind einerseits oxidierende und andererseits reduzierende Stoffe. Die Reaktionen sind elektrochemische Prozesse auf Elektroden der Brennstoffzellen. Die Enden der Trägerstruktur, zwischen denen sich ein charakteristisches Temperaturprofil erstreckt, befinden sich bei einer erste Zelle der Stapelanordnung (bei z = 0 auf einer vertikalen z-Achse) bzw. einer letzten Zelle (bei z = h, wobei h die Höhe des Stapels 60 ist).

Die beiden Edukte sind Luft A oder ein anderer gasförmiger Sauerstoffträger und das Gasgemisch R, das beispielsweise mit dem CPO-Reformer des ersten Ausführungsbeispiels erzeugt worden ist. Die Luft A wird über einen Aktor 63 und einen Eingangsstutzen 60a in die Hülle 61 eingespeist, in der die Luft A bei gleichzeitiger Vorerwärmung auf die Brennstoffzellen verteilt wird. Das Edukt R, das durch einen Eingangsstutzen 60a' in die Batterie 6 eingespeist wird, wird über einen zentralen Kanal 7 in die einzelnen Zellen des Stapels 60 verteilt. In der Regel weist der Stapel 60 in Richtung der vertikalen z-Achse ein Temperaturprofil mit einem Gradienten auf. Der Temperaturgradient ist variabel und hängt vom Betriebszustand der Batterie ab. In Fig. 4 sind qualitativ zwei Temperaturprofile 71 und 72 dargestellt, das Profil 71 für Volllast und das Profil 72 für eine Teillast. Die Profile 71, 72 stellen die Temperaturkurven im Verteilkanal 7 dar. Mit einem Widerstandsthermometer 1', das einen im Verteilkanal 7 angeordneten Widerstanddraht 10' (oder Sensordraht 10') und eine Messeinrichtung 12' umfasst, lässt sich wiederum eine integrale Messung durchführen, deren Resultat einem Mittelwert der Temperatur entspricht. Zwischen diesem Temperaturmittelwert und der Leistung der Batterie 6, die elektrische und thermische Energie abgibt, besteht wieder ein empirisch bestimmbarer Zusammenhang. Unter Verwendung des Temperaturmittelwerts sowie des genannten Zusammenhangs und mit dem Regler 3' lässt sich der Aktor 63 dem Massenstrom des anderen Edukts R entsprechend einstellen. Statt im Verteilkanal 7 kann die Temperatur auch in einem der Nachverbrennungsräume 62 mit einem dort angeordneten Sensordraht 10' überwacht werden.

Das Widerstandsthermometer 1 kann als Teil eines Überwachungsystems verwendet werden, mit dem ein Unterbruch der Eduktezufuhr einleitbar ist, sobald die Messung eine Temperatur anzeigt, die einen vorgegebenen Wert übersteigt. Diese Übertemperatur-Überwachung ist hinsichtlich einer Alterung des Sensors 10' unkritisch. Denn der Widerstand des Sensordrahts 10' vergrössert sich in der Regel mit der Alterung wegen eines Materialschwunds durch Oxidation. Es wird somit durch die Temperaturmessung ein zu hoher Wert angezeigt und folglich werden die Schutzmassnahmen nie zu spät eingeleitet.

Der Sensordraht 10 bzw. 10' kann im Bereich der Trägerstruktur geradlinig, gewellt, helixartig oder mäandrisch geformt sein. Eine helixartige Form ist zur Verwendung in einer Schüttung oder zur Erfassung der Temperatur in drei Dimensionen geeignet. Eine mäandrische Form mit langen Schleifen ergibt im Vergleich zur geradlinigen Form eine Erhöhung der Sensorempfindlichkeit.

Der Sensordraht 10 bzw. 10' kann - zumindest teilweise - aus Nickel Ni, Wolfram W, Molybdän Mo oder Platin Pt bestehen. Die spezifischen Widerstände dieser Metalle weisen folgende Temperaturkoeffizienten α auf (die alle positiv sind): 6.5 10⁻³ K⁻¹ (Ni), 4.5 10⁻³ K⁻¹ (W), 4.7 10⁻³ K⁻¹ (Mo) bzw. 3.9 10⁻³ K⁻¹ (Pt).

Der Sensordraht 10 bzw. 10' kann vorteilhafterweise mit einem Mantel aus einem bei 900°C inerten Material geschützt werden, beispielsweise mit einem Mantel aus Inconel. Durch den Schutzmantel kann auch verhindert werden, dass katalytische Reaktionen auf der Oberfläche des Sensordrahts stattfinden, welche eine Verfälschung der Temperaturmessung bewirken würden. Der Schutzmantel kann auch eine mechanische Verstärkung darstellen, mit welcher der Sensordraht 10 bzw. 10' gegen Bruch geschützt ist.

## Patentansprüche

1. Verfahren zur Regelung von Reaktionen zwischen mindestens zwei gasförmigen Edukten (E1, E2; A, R), deren Massenströme steuerbar sind, wobei die Reaktionen zumindest teilweise unter Beteiligung von einem auf einer Trägerstruktur aufgebrachten, insbesondere katalytisch wirksamen Stoff stattfinden, in oder an der Trägerstruktur Messungen von Temperaturen, die durch die Reaktionen bestimmt sind, durchgeführt werden, und die Massenströme bezüglich den gemessenen Temperaturen geregelt werden,
**dadurch gekennzeichnet, dass** das Verhältnis der Massenströme geregelt wird und dass die Temperaturen mit einem Widerstandsthermometer (1, 1') gemessen werden, wobei ein Sensor (10, 10') dieses Thermometers drahtförmig ausgebildet ist, einen positiven Temperaturkoeffizienten des spezifischen Widerstands aufweist und in oder an der Trägerstruktur zwischen einem ersten und einem zweiten Ende (21, 22) der Trägerstruktur angeordnet ist, so dass sich eine integrale Temperaturmessung zwischen den beiden Enden ergibt.

2. Verfahren nach Anspruch 1, **dadurch gekennzeichnet, dass** die Reaktionen eine exotherme Reaktion und eine Folgereaktion umfassen - insbesondere eine partielle Oxidation eines Brennstoffs und eine katalytische Reformierung des Brennstoffs - und die genannten Enden (21, 22) der Trägerstruktur eine Eintrittsstelle (21) für die Edukte (E1, E2) bzw. eine Austrittsstelle (22) für ein Produktgas (R) sind.

3. Verfahren nach Anspruch 1, **dadurch gekennzeichnet, dass** die Trägerstruktur eine Stapelanordnung (60) von Brennstoffzellen mit einer ersten bzw. einer letzten Zelle ist, dass die Edukte (A, R) einerseits oxidierende und andererseits reduzierende Stoffe sind, dass die Reaktionen elektrochemische Prozesse auf Elektroden der Brennstoffzellen sind, und dass die genannten Enden der Trägerstruktur sich bei der ersten bzw. letzten Zelle befinden.

4. Verfahren nach einem der Ansprüche 1 bis 3, **dadurch gekennzeichnet, dass** das Widerstandsthermometer (1) als Teil eines Überwachungsystems verwendet wird, mit dem ein Unterbruch der Eduktezufuhr eingeleitet wird, sobald die Messung eine Temperatur anzeigt, die einen vorgegebenen Wert übersteigt.

5. Reaktor zum Durchführen eines Verfahrens gemäss einem der Ansprüche 1 bis 4.

6. Reaktor nach Anspruch 5, **dadurch gekennzeichnet, dass** der Sensordraht im Bereich der Trägerstruktur geradlinig, gewellt, helixartig oder mäandrisch geformt ist.

7. Reaktor nach Anspruch 5 oder 6, **dadurch gekennzeichnet, dass** der Sensordraht aus Nickel, Wolfram, Molybdän oder Platin zumindest teilweise besteht, wobei die genannten Stoffe mit Vorteil mit einem Mantel aus einem bei 900°C inerten Material abgedeckt sein können.

8. Anwendung des Verfahrens gemäss einem der Ansprüche 1 bis 4 in einer Brennstoffzellenbatterie und/oder einem CPO-Reformer, in dem eine partielle Oxidation eines Brennstoffs und eine katalytische Reformierung des Brennstoffs als Folgereaktion durchgeführt werden.
